# FASCICULE DE BREVET EUROPEEN

(11) **EP 0 409 129 B1**
(45) Date de publication et mention de la délivrance du brevet: **31.08.1994**
(21) Numéro de dépôt: 90113555.8
(22) Date de dépôt: 16.07.1990
(51) Int. Cl.: H04M 19/08

(54) **Poste téléphonique à prise de ligne sans décrochage**
Fernsprechapparat mit Verbindung mit der Teilnehmerleitung ohne Abnahme des Hörers
Telephone set with engaging of the line without lifting the hook

(30) Priorité: 18.07.1989 FR 8909616
(43) Date de publication de la demande: 23.01.1991
(73) Titulaire: ALCATEL BUSINESS SYSTEMS, F-75008 Paris (FR)
(72) Inventeur: Malaurie, Claude, F-95120 Ermont (FR); Chataignon, André, F-95100 Argenteuil (FR); Becker, Pierre, F-95110 Sannois (FR); Duvernay, Jean-Marc, F-75011 Paris (FR)
(74) Mandataire: Weinmiller, Jürgen

(56) Documents cités:
- FR-A- 2 534 755
- TN NACHRICHTEN, no. 91, 1987, pages 3-14; KRÄMER et al.: "TN-Terminals im neuen Design"
- TOUTE L'ELECTRONIQUE, no. 522, mars 1987, pages 833-86; "Une interface ligne téléphonique/modem"

## Description

L'invention concerne un poste téléphonique permettant la prise en appel ou en réponse et le relâchement de la ligne téléphonique connectée à lui, tant par décrochage manuel du combiné qu'il comporte qu'au moyen d'une commande produite par exemple par enfoncement fugitif d'une touche monostable ou par action d'un dispositif approprié, sans décrochage du combiné.

Elle concerne plus particulièrement les postes téléphoniques qui comportent au moins un circuit nécessitant un passage par un état initial déterminé impliquant une alimentation préalable avant d'être apte à fonctionner, par exemple un circuit de type microprocesseur.

La prise d'une ligne téléphonique raccordée à un poste pour un appel par un utilisateur du poste peut s'effectuer classiquement par simple décrochage manuel du combiné du poste par cet utilisateur, ou par création d'une commande comme indiqué ci-dessus.

La réponse à un appel arrivant sur un poste, via la ligne à laquelle ce poste est raccordé s'effectue de manière identique par décrochage manuel ou par envoi d'une commande qui peut être celle de prise évoquée ci-dessus.

Dans chaque cas, la prise en appel ou en réponse se traduit par la fermeture de la boucle ouverte par les deux fils de conversation de la ligne entre le poste et le commutateur téléphonique distant auquel il est rattaché ; un courant est alors fourni au poste par la ligne tant que la boucle est fermée, il permet d'alimenter au moins partiellement le poste. Dans de nombreux cas, le poste n'est plus alimenté lorsque la boucle est réouverte par le raccrochage manuel du combiné agissant sur les contacts d'un crochet commutateur associé et/ou par action d'une commande de raccrochage qui peut éventuellement être identique à celle de prise et/ou produite par le même dispositif.

Or certains circuits et notamment les processeurs, qui équipent les postes pour l'obtention de possibilités d'exploitation diverses et variées, doivent impérativement être alimentés de manière à être placés dans un état initial déterminé avant de pouvoir être opérationnels.

Ceci est donc contraignant, lorsqu'un tel circuit incorporé dans un poste téléphonique n'est alimenté que par la ligne à laquelle le poste est raccordé et par conséquent à partir du moment où celle-ci est elle-même convenablement alimentée, puisque, sans arrangement particulier, certaines actions effectuées au niveau du poste par l'intermédiaire, par exemple d'un microprocesseur, ne pourraient être prise en compte, ce dernier n'étant pas en mesure de les traiter.

Or la tendance est d'équiper les postes de tels circuits et en particulier de microprocesseurs, pour augmenter les possibilités d'exploitation au profit des utilisateurs.

L'invention propose donc un poste téléphonique permettant la prise en appel et en réponse et le relâchement d'une ligne téléphonique connectée à lui, tant par l'intermédiaire d'une première commande produite par un premier organe de commutation, actionné par le combiné du poste, que par une commande produite par un second organe de commutation actionnable indépendamment du combiné, et comportant un microprocesseur de commande associé à un ensemble de circuits électroniques d'exploitation téléphonique, le microprocesseur et au moins certains des circuits de l'ensemble étant susceptibles d'être alimentés par l'intermédiaire de deux fils de la ligne téléphonique, via un pont de diodes et un agencement contrôlé d'alimentation lorsque ces deux fils sont temporairement interconnectés au niveau du poste.

Selon une caractéristique de l'invention, ce poste téléphonique comporte des organes de commutation produisant lesdites commandes par l'intermédiaire d'éléments individuels de mise en communication qui sont insérés en parallèle dans une boucle reliant, au travers de l'agencement contrôlé d'alimentation, les bornes de sortie du pont de diodes, dit premier pont, dont les bornes d'entrée sont raccordées aux deux fils de ligne, via un circuit de protection, ainsi qu'un second pont à diodes, utilisé en redresseur, relié par des condensateurs en sortie du dispositif de protection, en parallèle au premier pont, et apte à alimenter le microprocesseur et les circuits concernés de l'ensemble, par l'intermédiaire d'un second agencement contrôlé d'alimentation à partir des signaux alternatifs transmis par la ligne pendant les phases de sonnerie.

La figure 1 présente un schéma de principe d'un poste téléphonique selon l'invention.

La figure 2 présente un schéma de l'agencement de prise de ligne et d'alimentation du poste par la ligne selon l'invention.

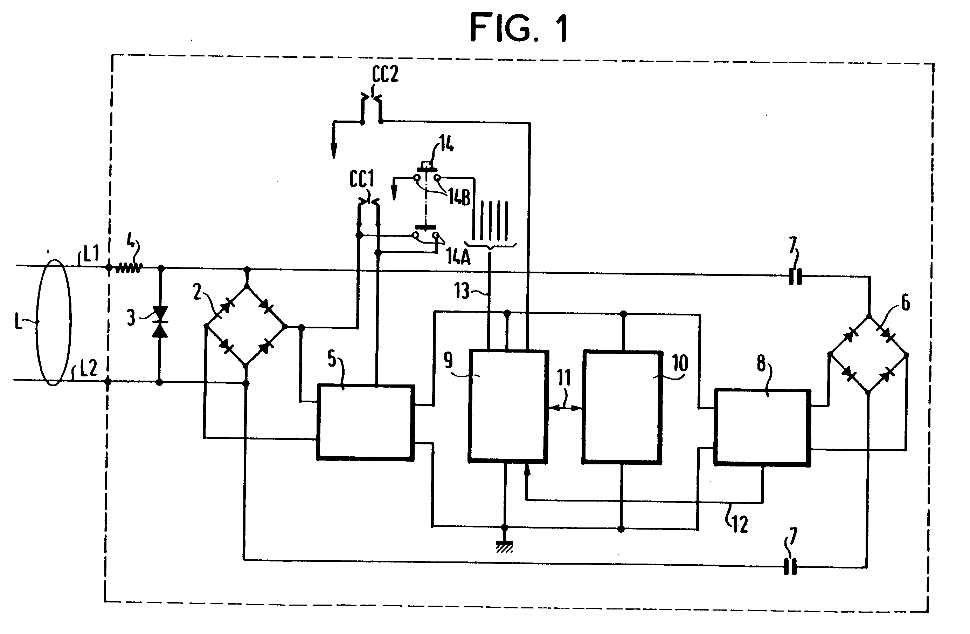

Le poste téléphonique 1 présenté figure 1 est classiquement destiné à être raccordé et alimenté par un commutateur téléphonique non figuré, via au moins deux fils d'une ligne téléphonique L. Cette dernière permet les échanges de signaux téléphoniques, notamment de conversation entre le poste 1, le commutateur téléphonique et les autres postes avec lesquels ce poste 1 est susceptible d'entrer en communication, via le commutateur.

La ligne L assure l'alimentation du poste 1 en courant continu à partir du commutateur téléphonique lorsque la boucle établie entre eux par la ligne L est bouclée au niveau de ce poste 1, par exemple par la fermeture d'un contact CC1 du crochet commutateur sur lequel repose le combiné du poste 1 lorsque ce combiné est décroché dudit crochet. La ligne L transmet aussi les signaux alternatifs hachés de sonnerie produits par le commutateur téléphonique lors d'un appel du poste 1 par un autre poste.

Le poste 1 vient se raccorder à la ligne L par au moins deux bornes L1 et L2 qui sont connectées aux bornes d'entrée d'un pont à diodes 2, via un circuit de protection composé ici par un dispositif antisurtension à thyristors 3 en parallèle entre les bornes L1 et L2 et une résistance 4 de limitation de courant de ligne en série entre la borne L1 et l'une des bornes d'entrée.

Le pont 2 est apte à transmettre le courant continu fourni par la ligne à un agencement contrôlé d'alimentation 5 du poste auquel il est relié par ses sorties + et -.

Un second pont à diodes 6 est monté en parallèle avec le pont 2 aux bornes d'entrée duquel il est relié par deux condensateurs 7. Ce pont 6 est destiné à redresser les signaux alternatifs de sonnerie apparaissant sur la ligne L en phase d'appel du poste 1 par un autre poste, au profit d'un second agencement contrôlé d'alimentation 8 du poste auquel il est relié par ses sorties.

Ceci permet d'alimenter le poste 1 en courant continu pendant les phases où le poste est appelé et où la boucle n'est pas encore fermée.

Les deux agencements contrôlés d'alimentation 5 et 8 sont organisés pour alimenter alternativement le poste 1 ou plus précisément les circuits électroniques qu'il comporte, par exemple un microprocesseur 9 de commande et des circuits électroniques d'exploitation téléphonique du poste regroupés fonctionnellement en un ensemble 10 d'un ou plusieurs circuits, par exemple ici un circuit TCA 3386 de la société MOTOROLA.

Un tel ensemble 10 regroupe par exemple une fonction audio, une fonction duplexeur, une fonction signalisation via la ligne, c'est-à-dire les équipements transducteurs sonores a l'émission et en réception du poste et leurs éventuels amplificateurs, le circuit de conversion deux fils-quatre fils, le circuit générateur de signalisation décimale ou multifréquence, etc...

Le microprocesseur 9 est classiquement relié à l'ensemble 10 par un ensemble de liaisons 11 par l'intermédiaire desquelles il envoie des commandes et reçoit des informations pour l'exploitation du poste, d'une manière qui ne sera pas précisée ici dans la mesure où elle n'a qu'un rapport indirect avec l'invention.

Il est également relié par une liaison 12 au second circuit d'alimentation 8 de manière à être informé de la réception de signaux alternatifs de sonnerie caractéristiques de l'appel du poste 1 par un autre poste, et par une liaison 13 à un clavier de commande du poste dont seule une touche 14 a été figurée ici.

La prise de la ligne L par un utilisateur du poste 1 pour un appel entrant ou sortant peut s'effectuer par décrochage du combiné de ce poste qui libère le crochet commutateur dont le premier contact CC1 assure alors par sa fermeture le bouclage de la boucle reliant le poste au commutateur téléphonique auquel il est rattaché, via les fils de la ligne L.

Un second contact CC2 ici relié au microprocesseur 9 par la liaison 13 informe celui-ci de l'état ouvert ou fermé de la boucle.

La prise de ligne L par un utilisateur du poste 1 peut alternativement s'effectuer par un appui fugitif sur une touche appropriée du clavier du poste, telle la touche 14 dont un premier contact 14A déclenche la fermeture de boucle d'une manière qui sera évoquée plus loin, et dont un second contact 14B est relié à une entrée de données du microprocesseur 9.

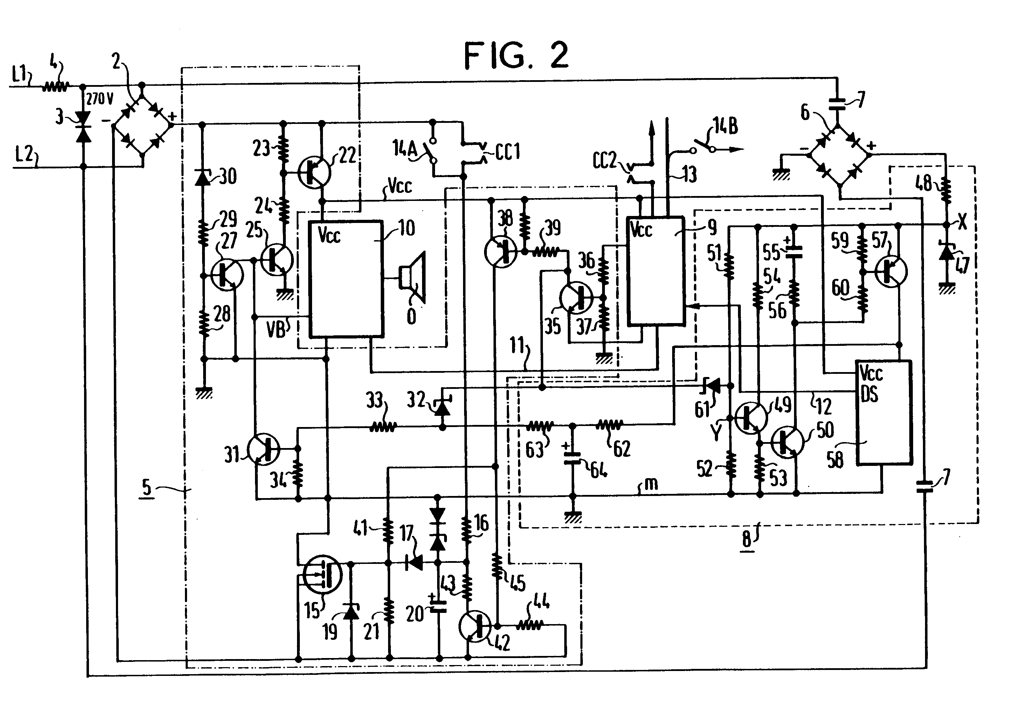

La figure 2 permet de détailler l'élément caractéristique de l'invention que constitue l'agencement de prise de ligne et d'alimentation et plus spécifiquement les deux agencements contrôlés d'alimentation 5 et 8.

Comme indiqué en liaison avec la figure 1, l'agencement d'alimentation 5 est relié aux bornes de sortie + et - d'un pont 2 connecté aux bornes d'entrée L1 et L2 du poste via un circuit de protection 3, 4.

Un contact 14A, ici de type travail, d'une touche 14 de clavier du poste et un contact CC1, également de type travail, du crochet commutateur du poste sont reliés à la borne de sortie + du pont de manière à permettre l'application de la tension d'alimentation positive fournie par ce pont sur l'électrode de commande d'un transistor 15, dit d'interruption de ligne, ici de type VMSO. Ce transistor 15 a sa source reliée à la borne de sortie - du pont et son drain relié d'une part à la borne négative du ou des circuits téléphoniques de l'ensemble 10 et d'autre part à la masse du circuit 5 la grille du transistor d'interruption de ligne 15 est reliée au point commun aux contacts CC1 et 14A par l'intermédiaire d'une résistance de forte valeur 16 et d'une diode 17 à la cathode de laquelle elle est reliée.

Une diode Zener 19 placée entre cette grille de transistor 15 et la borne de sortie - du pont protège ce transistor contre d'éventuelles surtension, supérieures par exemple a douze volts.

Un condensateur 20 permet de maintenir temporairement la conduction du transistor d'interruption de ligne 15, lorsque la touche 14 est fugitivement enfoncée, il est alors chargé par l'intermédiaire du contact 14A pendant que la touche est enfoncée et il se décharge très lentement, via une résistance de forte valeur 21 reliée au point commun aux cathodes des diodes 19 et 17 et à la grille du transistor 15, lui-même étant relié d'une part entre l'anode de la diode 17 et la résistance 16 d'autre part à la borne de sortie - du pont 2.

L'alimentation de l'ensemble 10 est également contrôlée par un transistor 22, dit de mise en liaison et ici de type PNP, dont l'émetteur est relié à la borne de sortie + du pont 2 et dont le collecteur est relié à une liaison d'alimentation Vcc du poste.

La base du transistor 22 est connecté au point milieu d'un pont diviseur, à résistances 23 et 24 en série, reliées l'une à la borne de sortie + du pont 2 et l'autre à la masse du circuit contrôlé d'alimentation 5, via un transistor 25, dit intermédiaire et ici de type NPN.

L'ensemble 10 agit par exemple par l'intermédiaire d'un générateur de courant sur la base du transistor 25, la conduction de celui-ci entraîne celle du transistor 22 et l'alimentation de l'ensemble 10 par la liaison Vcc.

Le microprocesseur 9 qui est connecté d'une part à la masse du circuit 5 et d'autre part au collecteur du transistor 22 comme l'ensemble 10 est alors lui aussi alimenté par la liaison Vcc.

Un circuit de protection comprenant un transistor 27, de type NPN, permet de relier la base du transistor 25 à la masse et en conséquence de bloquer le transistor 22 pour protéger l'ensemble 10 et le microprocesseur 9 vis-à-vis de fortes surtensions aux bornes de sortie du pont 2.

A cet effet la base du transistor 27 est polarisée par un pont diviseur à résistances 28, 29 dont l'une est reliée à la masse alors que l'autre est reliée à la borne de sortie + du pont 2, via une diode Zener 30, qui conduit en inverse pour une tension inférieure à celle du dispositif antisurtension 3 par exemple cent trente volts au lieu de deux cent soixante dix.

La conduction en inverse de la diode 30 débloque le transistor 27 qui court-circuite la base et l'émetteur du transistor 25, qui se bloque.

Un transistor 31, de type NPN, contrôle aussi la base du transistor 25 pendant les phases de réception d'un signal alternatif de sonnerie par le poste, la tension de sonnerie d'une valeur maximale de quatre vingt dix volts étant inférieure à la tension Zener de la diode 30.

Ce transistor 31 relié par son collecteur à la base du transistor 25 est relié par son émetteur à la masse, sa base est commandée par le second circuit contrôlé d'alimentation 8, via une diode SCHOTTKY 32 et une résistance 33, cette dernière formant un pont diviseur avec une résistance 34 de polarisation connectée entre la base et la masse à laquelle est reliée l'émetteur du transistor 31.

Le transistor d'interruption de boucle 15 qui est susceptible d'être commandé à la fermeture par les contacts CC1 et 14A du crochet commutateur du poste et de la touche 14 est normalement contrôlé par le microprocesseur 9, lorsqu'il est alimenté.

A cet effet le microprocesseur 9 contrôle la base d'un transistor 35, de type NPN, au travers d'un pont diviseur à résistances 36, 37 dont l'une est reliée à la masse avec l'une des deux bornes d'alimentation du microprocesseur et l'émetteur dudit transistor, alors que l'autre est reliée à une sortie de commande du microprocesseur.

Le collecteur du transistor 35 est relié à la base d'un transistor 38, de type PNP, via une résistance 39, de manière à la commander. Ce transistor 38 est relié au collecteur du transistor 22 d'une part par son émetteur et d'autre part par sa base via une résistance 40, il est aussi connecté à la base du transistor 15, via une résistance 41. Ceci permet au microprocesseur 10 de contrôler l'état conducteur ou bloqué du transistor d'interruption de ligne, lorsqu'une prise de ligne a été effectuée au moyen de la touche 14 ou du crochet commutateur. La conduction du transistor 38 entraîne celle d'un transistor 42, de type NPN, qui est apte à assurer une décharge rapide du condensateur 20 et une mise hors circuit temporaire de la liaison empruntant la résistance 16 en raison des valeurs respectives des résistances 16, 21, 41 et 43 impliquées.

Le transistor 42 dont l'émetteur est relié à la borne de sortie - du pont 2 est à cet effet relié par son collecteur au point commun à la résistance 16 et à l'anode de la diode 17 par une résistance 43 faible devant les résistances 16, 21, 41.

La base du transistor 42 est classiquement reliée à son émetteur, via une résistance 44, et au collecteur du transistor 38 qui la commande via une résistance 45.

Les signalisations à émettre ou recevoir en cours de communication par le poste, via la ligne téléphonique, sont ici traitées au niveau de l'ensemble 10, sous la supervision du microprocesseur 9 auquel il est relié à cet effet par la liaison 11.

Au raccrochage déclenché par l'ouverture des contacts CC1 et CC2 du crochet commutateur ou par l'appui d'une touche du clavier du poste, qui est éventuellement la touche 14, le microprocesseur 9 est informé par celui des contacts CC2 ou 14B qui est ouvert et il commande le blocage du transistor 35 par action logicielle.

Le transistor 35 entraîne le blocage des transistors 38 et 42 et par conséquent celui du transistor d'interruption de ligne 15, qui interrompt la liaison établie entre les bornes de sortie + et - du pont 2 et par conséquent la boucle de ligne.

Lorsque le poste considéré est appelé par un poste distant alors qu'il est inutilisé, il reçoit un signal de sonnerie alternatif qui n'est pas pris en compte par le circuit contrôlé d'alimentation 5 pour les raisons évoquées plus haut, et en particulier en raison de l'état bloqué des transistors 15 et 22 en l'absence de liaison établie par l'un ou l'autre des contacts 14A et CC1.

Par contre, le second pont de diodes 6 est alimenté, via les condensateurs 7, et si la tension redressée apparaissant à ses bornes de sortie est inférieure à une valeur limite, d'ici environ cent trente volts, fixée par une diode Zener 47, elle est appliquée via une faible résistance de limitation de courant 48 à l'entrée d'un montage DARLINGTON composé à l'aide de deux transistors 49, 50, de type NPN, via une résistance 51 dans le second circuit contrôlé d'alimentation 8. Deux résistances 52 et 53 de polarisation des bases des transistors 49 et 50 relient respectivement chacune une base au potentiel de masse qui, via une liaison m, est commun aux deux circuits contrôlés d'alimentation 5 et 8, et auquel est également relié l'émetteur du transistor 50 situé en aval dans le montage. Une forte résistance 54 relie le collecteur du transistor 49 à un point X commun à la résistance 48 et à la cathode de la diode 47, alors que c'est par un circuit RC série composé d'un condensateur 55 et d'une résistance moyenne 56 que le collecteur du transistor 50 est relié à ce même point. La conduction des transistors 49 et 50 en présence d'un signal de sonnerie alternatif assure la conduction d'un transistor de mise en service 57, de type PNP, inséré en amont d'un circuit d'alimentation à découpage 58 entre ce dernier et le point commun X.

Le transistor 57 est relié par son émetteur au point X et par sa base d'une part au point X par une résistance 59, d'autre part au collecteur du transistor 50 par une résistance 60, il assure la mise en circuit du circuit d'alimentation à découpage 58 entre le point X porté à un potentiel positif par le second pont 6 et la masse à laquelle ce circuit est aussi relié.

La tension d'alimentation qui est fournie par ce circuit d'alimentation 58 est appliquée à la liaison Vcc et en conséquence transmise à l'ensemble 10 et au processeur 9.

Simultanément, un signal DS d'appel sonnerie est fourni par le circuit 58 à une entrée du processeur 9 qui commande l'émission d'un signal de sonnerie par le circuit concerné de l'ensemble 10, via un transducteur sonore 0.

Le collecteur du transistor 57 commande aussi le transistor 31 du premier agencement d'alimentation 5, via la résistance 33 et un filtre en T composé des deux résistances 62 et 63 en série et d'un condensateur 64, inséré entre la masse et le point commun aux résistances 62 et 63.

La conduction du transistor 57 en phase de sonnerie entraîne celle du transistor 31 qui court-circuite la résistance 26 et bloque le transistor 22 et par conséquent l'alimentation de la liaison Vcc par le pont 2.

Le point commun Y aux résistances 51, 52 et à la base du transistor 49 est relié au collecteur du transistor 35 du premier agencement d'alimentation, via une diode SCHOTTKY 61, ceci permet de bloquer l'alimentation à découpage dès que le processeur 9 envoie une commande de prise de ligne au transistor 35, via la résistance 36, la diode SCHOTTKY 32 reliant alors la sortie du filtre en T à la masse et assurant par conséquent l'isolement du circuit d'alimentation 58.

Dans l'exemple proposé, la substitution de l'alimentation du processeur 9 et de l'ensemble 10 par l'agencement d'alimentation 5 à celle par le circuit d'alimentation 8 est déclenchée par le signal de prise qui est envoyé au processeur 9 soit par le contact CC2 soit par le contact 14B. Dans une variante de réalisation, il est possible de faire émettre un tel signal de prise par tout dispositif approprié par exemple par un répondeur automatique ou un terminal informatique connecté au poste téléphonique doté de l'agencement selon l'invention.

## Revendications

1. Poste téléphonique permettant la prise en appel et en réponse et le relâchement d'une ligne téléphonique (L) connectée à lui, tant par l'intermédiaire d'une première commande produite par un premier organe de commutation (CC), actionné par le combiné du poste, que par une commande produite par un second organe de commutation (14) actionnable indépendamment du combiné, et comportant un microprocesseur de commande (9) associé à un ensemble (10) de circuits électroniques d'exploitation téléphonique, le microprocesseur et au moins certains des circuits de l'ensemble (10) étant susceptibles d'être alimentés par l'intermédiaire de deux fils de la ligne téléphonique, via un pont de diodes (2) et un agencement contrôlé d'alimentation (5), lorsque ces deux fils sont temporairement interconnectés au niveau du poste, caractérisé en ce qu'il comporte des organes de commutation (CC, 14) produisant lesdites commandes par l'intermédiaire d'éléments individuels de mise en communication (CC1, 14A) qui sont insérés en parallèle dans une boucle reliant, au travers de l'agencement contrôlé d'alimentation (5), les bornes de sortie du pont de diodes (2), dit premier pont, dont les bornes d'entrée sont raccordées aux deux fils de ligne, via un circuit de protection (3, 4), ainsi qu'un second pont à diodes (6), utilisé en redresseur, relié par des condensateurs (7) en sortie du dispositif de protection, en parallèle au premier pont, et apte à alimenter le microprocesseur et les circuits concernés de l'ensemble (10), par l'intermédiaire d'un second agencement contrôlé d'alimentation (8) à partir des signaux alternatifs transmis par la ligne pendant les phases de sonnerie.

2. Poste téléphonique selon la revendication 1, caractérisé en ce que les éléments individuels de mise en communication (CC1, 14A) insérés dans la boucle commandent la base d'un transistor (15), dit d'interruption de ligne, connecté entre la borne de sortie négative (-) du premier pont (2) et la masse commune au microprocesseur (9) et aux circuits concernés de l'ensemble (10) pour contrôler l'alimentation de ceux-ci par le premier agencement d'alimentation (5) qui le contient en assurant les ouvertures et fermetures de boucle au niveau du poste.

3. Poste téléphonique selon la revendication 2, caractérisé en ce que le second agencement d'alimentation (8) comporte un circuit d'alimentation à découpage (58) alimenté par l'intermédiaire du second pont (6) lorsque ce dernier reçoit de la ligne (L) des signaux alternatifs de sonnerie et apte à alimenter le microprocesseur (9) et les circuits concernés de l'ensemble (10) auxquels ce circuit d'alimentation (58) est relié par les mêmes fils (Vcc, m) que le premier agencement d'alimentation (5).

4. Poste téléphonique selon la revendication 2, caractérisé en ce que le transistor d'interruption de ligne (15) commande, via un transistor intermédiaire (25), un transistor de mise en liaison (22), inséré entre la borne de sortie positive (+) du premier pont (2) et le fil d'alimentation positif (Vcc) du microprocesseur (9) et des circuits concernés de l'ensemble (10), ledit transistor intermédiaire étant également contrôlé de manière à interrompre la liaison entre ladite borne de sortie positive du premier pont et ledit fil d'alimentation positif, d'une part par un transistor (27) d'un montage (28, 29, 30) sensible aux surtensions en sortie du premier pont, d'autre part par un transistor de blocage (31) commandé par le second agencement contrôlé d'alimentation (8), lorsque ce dernier est actif pendant les phases où il reçoit les signaux alternatifs de sonnerie que transmet la ligne (L).

5. Poste téléphonique selon les revendications 3 et 4, caractérisé en ce que le second agencement contrôlé d'alimentation (8) comporte un transistor de mise en service (57) qui est relié d'une part à la borne de sortie positive (+) du second pont (6) et d'autre part à la borne alimentée positive du circuit d'alimentation (58) et qui est contrôlé par un montage (47-56) de commande sensible à la présence ou non d'une tension redressée en sortie du second pont correspondant à la transmission de signaux alternatifs de sonnerie par la ligne (L) pour alimenter ou non ledit circuit d'alimentation (58).

6. Poste téléphonique selon la revendication 5, caractérisé en ce que le montage de commande du second agencement contrôlé d'alimentation (8) comporte un montage Darlington (49, 50) qui est apte à commander le transistor d'entrée (57) en fonction de la tension redressée présente entre les bornes de sortie du second pont (6), ladite tension étant appliquée aux extrémités d'un pont diviseur à résistances (51, 52) dont le point commun est relié à la base du transistor de blocage (31) du premier agencement d'alimentation (5) pour interdire l'alimentation du processeur (9) et des circuits concernés de l'ensemble (10) par ce premier agencement, lorsque des signaux alternatifs de sonnerie sont reçus de la ligne (L) par le poste.

7. Poste téléphonique selon la revendication 6, caractérisé en ce que le microprocesseur (9) est relié par une sortie à la base d'un transistor (38) de commande du transistor d'interruption de ligne (15) pour en assurer le contrôle après prise de la ligne (L), ledit transistor de commande (38) étant lui-même commandé via un transistor (35) apte à mettre hors-circuit le circuit d'alimentation (58) lorsque le microprocesseur est alimenté, qu'il est lui-même rendu passant par la commande dudit microprocesseur et qu'il bloque le montage Darlington (49, 50) par mise à la masse de la base du premier transistor de ce montage.

8. Poste téléphonique selon la revendication 2, caractérisé en ce que le premier agencement d'alimentation (5) comporte un condensateur (20) entre un point commun aux éléments individuels de communication (CC1, 14A), et la borne négative du premier pont en parallèle sur la liaison grille-source du transistor d'interruption de ligne (15), de type VMOS, ledit condensateur étant affecté d'une forte résistance (21), parallèle, pour permettre une commande temporaire suffisante dudit transistor d'interruption de ligne par un signal de courte durée occasionné par un appui fugitif du second élément individuel de communication (14A) constitué par un contact de touche monostable, ainsi qu'un transistor (42) de court-circuitage dudit condensateur avant relâchement de la ligne (L), ce transistor (42) étant activé par le microprocesseur (9), via le transistor de commande (38).

## Patentansprüche

1. Telefonapparat, der die Belegung bei einem abgehenden und einem ankommenden Anruf und das Freigeben einer an den Apparat angeschlossenen Telefonleitung (L) sowohl durch einen ersten Befehl, der von einem ersten Schaltglied (CC), das vom Telefonhörer des Apparats betätigt wird, als auch durch einen Befehl ermöglicht, der von einem zweiten Schaltglied (14) erzeugt wird, das unabhängig vom Telefonhörer betätigbar ist, wobei der Apparat einen Befehlsmikroprozessor (9) aufweist, der einer Gruppe von elektronischen Betriebsschaltungen (10) zugeordnet ist, wobei der Mikroprozessor und mindestens bestimmte Schaltungen der Gruppe (10) so beschaffen sind, daß sie durch zwei Drähte der Telefonleitung über eine Diodenbrükke (2) und eine gesteuerte Speiseschaltung (5) gespeist werden können, wenn die beiden Drähte zeitweilig im Apparat durchverbunden sind, dadurch gekennzeichnet, daß der Apparat Schaltglieder (CC, 14), die die Befehle mittels individueller Elemente (CC1, 14A) zum Aufbau der Verbindung erzeugen, die parallel in eine Schleife eingefügt sind, welche über die gesteuerte Speiseschaltung (5) die Ausgangsklemmen der Diodenbrücke (2) verbindet, erste Brücke genannt, deren Eingangsklemmen über eine Schutzschaltung (3, 4) an die beiden Leitungsdrähte angeschlossen sind, sowie eine zweite Diodenbrücke (6) aufweist, die als Gleichrichter benutzt wird und über Kondensatoren (7) an den Ausgang der Schutzeinrichtung parallel zur ersten Brücke angeschlossen und in der Lage ist, den Mikroprozessor und die betroffenen Schaltungen der Gruppe (10) durch eine zweite gesteuerte Speiseschaltung (8) ausgehend von den Wechselstromsignalen zu speisen, die während der Läutephasen über die Leitung übertragen werden.

2. Telefonapparat nach Anspruch 1, dadurch gekennzeichnet, daß die individuellen Elemente zum Aufbau der Verbindung (CC1, 14A), die in die Schleife eingefügt sind, die Basis eines Transistors (15), Leitungsunterbrechungstransistor genannt, steuern, der zwischen die negative Ausgangsklemme (-) der ersten Brücke (2) und die dem Mikroprozessor (9) und den betroffenen Schaltungen der Gruppe (10) gemeinsame Masse angeschlossen ist, um die Speisung dieser Komponenten durch die erste Speiseschaltung (5), welche den Transistor enthält, zu steuern, indem das Öffnen und Schließen der Schleife im Apparat bewirkt wird.

3. Telefonapparat nach Anspruch 2, dadurch gekennzeichnet, daß die zweite Speiseschaltung (8) eine Zerhackerspeiseschaltung (58) aufweist, die durch die zweite Brücke (6) gespeist wird, wenn diese von der Leitung (L) Wechselstromläutesignale empfängt, und die in der Lage ist, den Mikroprozessor (9) und die betroffenen Schaltungen der Gruppe (10) zu speisen, an die diese Speiseschaltung (58) durch die gleichen Drähte (Vcc, m) angeschlossen ist wie die erste Speiseschaltung (5).

4. Telefonapparat nach Anspruch 2, dadurch gekennzeichnet, daß der Leitungsunterbrechungstransistor (15) über einen Zwischentransistor (25) einen Verbindungsaufbautransistor (22) steuert, der zwischen die positive Ausgangsklemme (+) der ersten Brücke (2) und den positiven Speisedraht (Vcc) des Mikroprozessors (9) sowie die betroffenen Schaltungen der Gruppe (10) eingefügt ist, wobei der Zwischentransistor ebenfalls so gesteuert wird, daß er die Verbindung zwischen der positiven Ausgangsklemme der ersten Brücke und dem positiven Speisedraht einerseits durch einen Transistor (27) einer auf Überspannungen am Ausgang der ersten Brücke ansprechenden Schaltung (28, 29, 30) und andererseits durch einen Sperrtransistor (31) unterbricht, der von der zweiten gesteuerten Speiseschaltung (8) gesteuert wird, wenn letztere während derjenigen Phasen aktiv ist, in denen sie die Wechselstromläutesignale empfängt, welche die Leitung (L) überträgt.

5. Telefonapparat nach den Ansprüchen 3 und 4, dadurch gekennzeichnet, daß die zweite gesteuerte Speiseschaltung (8) einen Inbetriebnahmetransistor (57) aufweist, der einerseits an die positive Ausgangsklemme (+) der zweiten Brücke (6) und andererseits an die positivgespeiste Klemme der Speiseschaltung (58) angeschlossen ist und der von einer Befehlsschaltung (47-56) gesteuert wird, die auf das Vorhandensein oder Fehlen einer gleichgerichteten Spannung am Ausgang er zweiten Brücke anspricht, entsprechend der Übertragung der Wechselstromläutesignale durch die Leitung (L), um die Speiseschaltung (58) zu speisen oder nicht zu speisen.

6. Telefonapparat nach Anspruch 5, dadurch gekennzeichnet, daß die Befehlsschaltung der zweiten gesteuerten Speiseschaltung (8) eine Darlington-Schaltung (49, 50) aufweist, die in der Lage ist, den Eingangstransistor (57) in Abhängigkeit von der gleichgerichteten Spannung auszulösen, die zwischen den Ausgangsklemmen der zweiten Brücke (6) ansteht, wobei die Spannung an die Enden einer Widerstandsteilerbrücke (51, 52) angelegt wird, deren gemeinsamer Verbindungspunkt an die Basis des Sperrtransistors (31) der ersten Speiseschaltung (5) angeschlossen ist, um die Speisung des Prozessors (9) und der betroffenen Schaltungen der Gruppe (10) durch diese erste Schaltung zu unterbinden, wenn die Wechselstromläutesignale der Leitung (L) vom Apparat empfangen werden.

7. Telefonapparat nach Anspruch 6, dadurch gekennzeichnet, daß der Mikroprozessor (9) mit einem Ausgang an die Basis eines Transistors (38) zur Steuerung des Leitungsunterbrechungstransistors (15) angeschlossen ist, um nach der Belegung der Leitung (L) dessen Steuerung zu bewirken, wobei der Befehlstransistor (38) seinerseits über einen Transistor (35) gesteuert wird, der die Speiseschaltung (58) ausschalten kann, wenn der Mikroprozessor gespeist wird und selber durch den Mikroprozessor leitend gesteuert wurde und wenn er die Darlington-Schaltung (49, 50) durch Erden der Basis des ersten Transistors dieser Schaltung sperrt.

8. Telefonapparat nach Anspruch 2, dadurch gekennzeichnet, daß die erste Speiseschaltung (5) einen Kondensator (20) aufweist, der zwischen einen den individuellen Verbindungselementen (CC1, 14A) gemeinsamen Verbindungspunkt und die negative Klemme der ersten Brücke parallel zur Gate-Source-Verbindung des Leitungsunterbrechungstransistors (15) vom Typ VMOS angeschlossen ist, wobei dem Kondensator ein hoher Widerstand (21) parallel zugeschaltet ist, um eine ausreichend lange Steuerung des Leitungsunterbrechungstransistors durch ein Signal kurzer Dauer zu ermöglichen, das durch einen flüchtigen Anschlag des zweiten individuellen Verbindungselements (14A) verursacht wird, das aus einem monostabilen Tasten Kontakt besteht, und daß die erste Speiseschaltung weiter einen Transistor (42) zum Kurzschließen des Kondensators vor der Freigabe der Leitung (L) aufweist, wobei der Transistor (42) durch den Mikroprozessor (9) über den Befehlstransistor (38) aktiviert wird.

## Claims

1. A telephone set enabling seizure for originating and terminating calls of a telephone line (L) connected thereto to be performed as well as release thereof, as the result both of a first command produced by a first switching entity (CC) actuated from the handset of said telephone set as well as via a command produced by a second switching entity (14) that is able to be actuated independently of the handset, and including a control microprocessor (9) associated with a set (10) of telephone operations electronic circuits, the microprocessor and at least certain ones of said electronic circuits of the set (10) being adapted to be powered via two wires of the telephone line, via a diode bridge (2) and a controlled power feeding arrangement (5), when these two wires are temporarily interconnected at the telephone set, characterized in that said telephone set includes switching entities (CC, 14) producing said commands via individual communication establishment elements (CC1, 14A) which are inserted in parallel in a loop which links, via said controlled power feeding arrangement (5), the output terminals of the diode bridge (2), designated as the first bridge, the input terminals of which are connected to the two line wires via a protection circuit (3, 4), together with a second diode bridge (6), performing rectification, linked via capacitors (7) to the output of said protection device, in parallel with the first bridge, and adapted to power the microprocessor and the relevant circuits of the set (10) of circuits, via a second controlled power feeding arrangement (8), from the alternating current signals transmitted by the line during the ringing phases.

2. Telephone set according to claim 1, characterized in that the individual communication establishment elements (CC1, 14A) which are inserted in the loop control the base of a transistor (15), designated as the line interrupt transistor, connected between the negative output terminal of the first bridge (2) and the common ground of the microprocessor (9) and the relevant circuits of said sets (10) of circuits, for controlling the powering thereof via the first controlled power feeding arrangement (5) of which it constitutes a part, and which is responsible for loop opening and closing at telephone set level.

3. Telephone set according to claim 2, characterized in that the second controlled power feeding arrangement (8) includes a chopped power supply circuit (58) fed from said second bridge (6) when the latter receives alternating ringing signals from the line (L) and which is adapted to power the microprocessor (9) and the relevant circuits of the set (10) of circuits to which this power supply circuit (58) is connected by the same wires (Vcc, m) as the first power feeding arrangement (5).

4. Telephone set according to claim 2, characterized in that said line interrupt transistor (15) controls, via an intermediate transistor (25), a link setup transistor (22), inserted between the positive output terminal of the first bridge (2) and the positive power supply wire (Vcc) of the microprocessor (9) and of the relevant circuits of said set (10) of circuits, said intermediate transistor being also controlled in such a fashion as to interrupt the link between said positive output terminal of the first bridge and said positive power supply wire, on the one hand, a transistor (27) of a circuit (28, 29,30) responsive to excess voltages at the output of the first bridge, and, on the other hand, a blocking transistor (31) controlled by said second controlled power feeding arrangement (8) when the latter is active during the phases it is receiving alternating ringing current signals transmitted by said line (L).

5. Telephone set according to claims 3 and 4, characterized in that the second controlled power feeding arrangement (8) includes a startup transistor (57) which is connected firstly to the positive output terminal of the second bridge (6) and, secondly, to the positively fed terminal of the power supply circuit (58), said transistor being controlled by a command circuit (47-56) which is responsive to the presence or absence of a rectified voltage at the output of the second bridge corresponding to the transmission of alternating ringing current signals by said line (L), so as to supply or not supply said power supply circuit (58).

6. Telephone set according to claim 5, characterized in that the command circuit for the second controlled power feeding arrangement (8) includes a Darlington pair (49, 50) adapted to control the input transistor (57) as a function of the rectified voltage present across the output terminals of the second bridge (6) said voltage being applied to the ends of a resistor divider bridge (51, 52) the common point of which is connected to the base of the blocking transistor (31) of the first controlled power feeding arrangement (5) for inhibiting powering of the processor (9) and the relevant circuits of said set (10) of circuits by said first arrangement when alternating ringing current signals are received from said line (L) by the telephone set.

7. Telephone set according to claim 6, characterized in that the microprocessor (9) has an output connected to the base of a transistor (38) that commands the line interrupt transistor (15) to take over control thereof after seizure of the line (L), said command transistor being itself commanded via a transistor (35) adapted to put said power supply circuit (58) out of circuit when the microprocessor is powered, it being itself rendered conducting by the command of said microprocessor, and blocking said Darlington pair (49, 50) by grounding the base of the first transistor thereof.

8. Telephone set according to claim 2, characterized in that the first power feeding arrangement (5) includes a capacitor (20) between a point common to said individual communication establishment elements (CC1, 14A) and the negative terminal of the first bridge in parallel across the gate-source junction of said line interrupt transistor (15) of the VMOS type, said capacitor having a high value resistor (21) associated therewith in parallel, to provide sufficient temporary command of said line interrupt transistor by a short duration signal occasioned by fleeting actuation of the second individual switching element (14A) constituted by an automatic-return contact key, together with a transistor (42) for short-circuiting said capacitor prior to release of the line (L), this transistor (42) being activated by said microprocessor (9) via said command transistor (38).
